# EUROPÄISCHE PATENTANMELDUNG

(11) **EP 2 088 356 A2**
(43) Veröffentlichungstag der Anmeldung: **12.08.2009**
(21) Anmeldenummer: 09450025.3
(22) Anmeldetag: 29.01.2009
(51) Int. Cl.: F16L 3/22, F16L 39/06, E03C 1/02

(54) **Installations-Montagemodul für Leitungen**

(30) Priorität: 08.02.2008 AT 2112008
(71) Anmelder: Herz Armaturen Ges.m.b.H., 1230 Wien (AT)
(72) Erfinder: Steiner, Johann, Ing., 7121 Weiden am See (AT)
(74) Vertreter: Wildhack, Andreas

(57) **Zusammenfassung**

Montagemodul für Gas-, und Wasserinstallationen am Übergang vom Gebäude zum Verbraucher , **dadurch gekennzeichnet, dass** er mit einem an einem Gebäudebauteil montierbaren Rohrinstallationspaneel (1) mit Wandmontageplatte (10), nach vorne wegragender Anschlussfläche (11) und von einer abwärts ragenden Vorderfläche (12) horizontal vorragendem, Rohrstückhalterungsbord (13) mit mehreren Rohrstückhalteausnehmungen (15) und mit einem auf demselben passsitzend aufsetzbaren, mit passsitzkooperierenden Passsitzelementen (111, 112) am Rohrinstallationspaneel (1) passsitzkooperierende Gegenpasssitzelemente (211, 212) aufweisenden Gerätepaneel (2) mit von dessen Rückwandplatte (20) vorragenden Halterungselementen (22) und einem unten balkonartig vorragenden Rohrstückhalterungsbord (23) mit an den, den genannten Rohrstückhalteausnehmungen (15) entsprechenden Stellen angeordneten Rohrstückhalteöffnungen (25) gebildet ist. (Fig.1)

## Beschreibung

Die Erfindung betrifft einen neuen, die Montagearbeiten auf dem Gebiet der Gas-, Wasser-, Fernwärme-, Heizungs-, Kühlungs- und dgl. -Installationen wesentlich erleichternden Installations-Montagemodul gemäß dem Oberbegriff des Anspruches 1.

In den letzten Jahren ist es immer schwieriger geworden, Fachkräfte auf dem Gebiet der Installationstechnik, sei es nun für Neubauten, Umbauten oder Adaptierungen von Büros, Geschäftsräumen, Wohnungen od. dgl. zu finden und auszubilden.

Somit ist es immer wichtiger geworden, die Arbeiten auf diesem an sich sehr breiten Gebiet möglichst zu vereinfachen und auf diese Weise auch die Montagezeit soweit wie möglich stark zu verkürzen. Hierfür bietet sich der auf verschiedenen Gebieten, insbesondere des Gewerbes und der Industrie, schon stark entwickelte Einsatz von weitgehend fertig vormontierten und bestückten Modulen, welche letztlich z.B. an einer Baustelle zu einer funktionstüchtigen Einheit zusammengeschlossen werden, geradezu an.

Einen Versuch in diese Richtung stellt eine Rohrhalte-Einrichtung gemäß der JP 2003 138613 A dar, welche ein unterhalb des Bodens einer Wohneinheit angeordnetes zentrales Anschluss-Gehäuse zeigt, in welches Mediumsversorgungsrohre münden und von welchem jeweils Mediumsweitertransportrohre zu den einzelnen Verbrauchsstellen eines Haushalts wie Küche, Bad, WC u.dgl. ausgehen. Innerhalb des Anschlussgehäuses werden die mittels Muttern aneinander geschlossenen Rohre von in demselben montierten Rohrhaltern gehalten.

Auf dem Gebiet der Installationstechnik hat sich diese Tendenz zur Modulbauweise jedoch noch keineswegs völlig durchgesetzt und hier setzt die vorliegende Erfindung an:

Sie betrifft einen schon eingangs genannten neuen Montagemodul, welcher die im kennzeichnenden Teil des Anspruches 1 genannten wesentlichen Merkmale aufweist.

Grundgedanke der neuen Montagemodule ist es, den Anschluss bzw. Übergang von den gebäude- bzw. bauseitigen also mit dem Bauwerk verbundenen verschiedenen Zu- und Ableitungen für den Zu- und Abtransport bzw. Zufluss und Abfluss von Frischwasser, Heißwasser, Dampf, Gas(en) und dgl. an die diese Güter aufnehmenden und nach Verwendung wieder abgebenden verbraucherseitigen Installationen, Armaturen od. dgl. einerseits möglichst exakt zu vollziehen und andererseits einen möglichst einfache und schnellen Zusammenbau der Module zu ermöglichen.

Dies ist mit dem neuen zweiteiligen, insbesondere einen Zusammenschluss der beiden das neue Installations-Montagemodul bildenden Funktionspaneele gelungen.

Hierbei ist es besonders wichtig, einen exakten Zusammenschluss zwischen den beiden die neuen Montagemodule bildenden Funktionspaneelen zu gewährleisten, wobei gleichzeitig eine einfache und schnelle Art des Zusammenschlusses ohne langwierige Justierarbeit od. dgl. ermöglicht ist.

In diesem Sinn haben sich Passsitz- und Gegen-Passsitzelemente an den einander zugekehrten und aneinanderzuschließenden Seiten bzw. Flächen der beiden zum neuen Montagemodul zusammenzuschließenden Funktionspaneele bewährt, wie dies im **Anspruch 2** näher spezifiziert ist.

Besonders günstig sind Formgebungen der Passsitz- und Gegen-Passsitzelemente gemäß **Anspruch 3**, welche sich durch ihre sich zum freien Ende hin verjüngende Form auszeichnen und zumindest im Fußbereich einen exakten gegenseitigen und lateral nicht verschiebbaren Passsitz ineinander ermöglichen.

Herstellungsbegünstigt und einfach in der Montage sind insbesondere Ausführungsformen der Passsitz- und Gegen-Passsitzelemente, die direkt in die aneinander anzuschließenden Funktionspaneele gestanzt und/oder aus denselben, z.B. durch einfaches Aufbiegen entsprechender, flacher Platten- bzw. Blechteile erstellt werden, wie dies dem **Anspruch 4** zu entnehmen ist.

An dieser Stelle ist zu betonen, dass bei allen Formen der Passsitz- und Gegen-Passsitzelemente eine umgekehrte und selbstverständlich auch eine "gemischte" Anordnung dieser Elemente an den beiden, das neue Montagemodul bildenden Funktionspaneelen im Rahmen der vorliegenden Erfindung möglich ist.

Um eine individuelle Höhenanpassung an die Einbauten, also insbesondere gegebenenfalls mit Hähnen, Ventilen, Schmutzfängern, Anschlussstutzen für Sensoren oder Zweigleitungen ausgestatteten Rohrstücke und deren Zusammenschlusselemente, wie z.B. Muttern, im Bereich zwischen den jeweils horizontal vorragenden Rohrstück-Halteborden der beiden Funktionspaneele zu ermöglichen, sind, wie dem **Anspruch 5** zu entnehmen, Einschneidungen im Blech zwischen und vor den Ausnehmungen bzw. Öffnungen, insbesondere des verbraucherseitigen Rohrführungs- und Gerätepaneels von Vorteil.

Bevorzugt ist weiters, wie dem **Anspruch 6** zu entnehmen, wenn die beiden Funktionspaneele gleich mit werkseitig vormontierten Rohrstücken versehen sind, wobei jeweils eine Serie dieser Rohrstücke an einem der Funktionspaneele jeweils mittels eines Rohr-Anschlusselements, wie z.B. mit einer Mutter, Überwurfmutter od. dgl., für einen Zusammenschluss mit den Rohrstücken des jeweils anderen Funktionspaneels ausgestattet sind und gleich in diesem vormontierten Zustand an die Bau- bzw. Montagestelle geliefert werden.

Selbstverständlich müssen nicht nur einfache Rohrstücke mittels ihrer Befestigungs- und Lagesicherungs-Muttern in den Öffnungen bzw. Ausnehmungen der beiden vorragenden Borde der Funktionspaneele vorgesehen sein, vielmehr können dies auch Rohrleitungsstücke, die mit einem Hahn, Ventil und/oder einem Temperaturmesssensor od. dgl, ausgestattet sind, sein.

Die genannten Rohrstücke selbst sind am einfachsten mittels beidseitigen Muttern schon in den Öffnungen bzw. Ausnehmungen der horizontal vorragenden Borde der beiden Funktionspaneele vormontiert, wobei die gegenseitige Anordnung und Lage dieser Rohrstücke an den beiden Funktionspaneelen mittels entsprechender Schablonen gleich exakt aufeinander abgestimmt sind, wodurch letztlich der Zusammenschluss der Rohrleitungen des bauseitigen Funktionspaneels mit den Rohrweiterführungen und den verschiedenen Funktionsgeräten des verbraucherseitigen Funktionspaneels erleichtert und somit auch wesentlich beschleunigt wird.

Günstig ist es, wenn das horizontal nach vorne ragende zweite Rohrstück- und Halterungsbord des Rohrführungs- und Gerätepaneels eine Art vorderseitige Brüstung aufweist, welche bevorzugterweise aus dem aufgebogenen Blech- bzw. Plattenmaterial dieses Paneels gebildet ist, wie aus dem **Anspruch 7** hervorgeht.

Der **Anspruch 8** gibt über die Materialien, aus welchen die beiden Funktionspaneele gebildet sind, näherer Auskunft.

Was die mögliche Bestückung des Rohrführungs- und Gerätepaneels mit Funktionsteilen, Geräten, Sensoren, Steuerungselementen und dgl. und mit dieselben miteinander verbindenden bzw. verknüpfenden Rohrleitungen neben dort eventuell ebenfalls verlegten Strom- und Datenleitungen betrifft, so gibt darüber - keineswegs erschöpfend - der **Anspruch 9** Auskunft.

Anhand der Zeichnung wird die Erfindung näher erläutert:

Es zeigen die Fig. 1 eine Schrägansicht eines aus den beiden Funktionspaneelen zusammengebauten erfindungsgemäßen Installations-Montagemoduls, die Fig. 2a bis 2c jeweils eine Vorder-, Seiten- und Oberansicht eines erfindungsgemäßen Moduls, die Fig. 3 im Detail eine besonders einfache und daher bevorzugte Ausführungsform von Passsitzelement und Gegen-Passsitzelement des neuen Moduls, die Fig. 4 den unteren Bereich des neuen Rohrführungs- und Geräte-Paneels und den das unterhalb desselben anzuordnenden Installations-Montagepaneel mit den hier mit einem Kugelhahn und einem Anschlussstutzen für einen Sensor versehenen Rohrstücken an diesem Paneel in Schrägansicht und die Fig. 5 eine Seitenansicht der mit den jeweils vormontierten Rohrstücken bestückten beiden Funktionspaneele im noch nicht zusammengebauten Zustand.

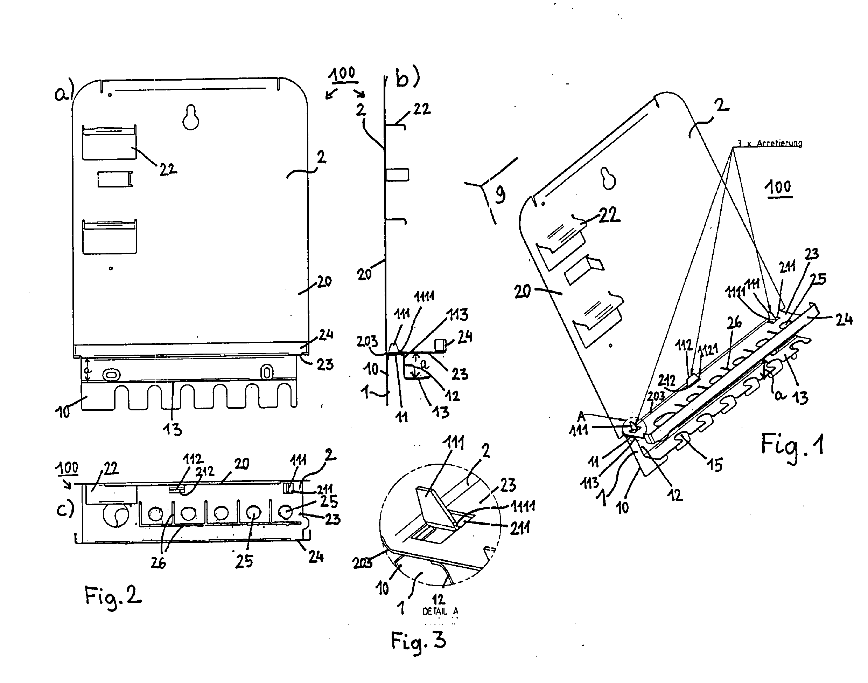

Der in der Fig. 1 gezeigte neue Installationsmontagemodul 100 ist gebildet mit zwei satt aneinander anschließende Funktionspaneelen 1 und 2, nämlich aus dem Rohrinstallations-Paneel 1 und dem Rohrführungs- und Geräte-Paneel 2 am Gebäudeteil 9.

Das Rohrinstallations-Paneel 1 weist ein von dessen Wand bzw. rückseitiger Wandmontageplatte 10 nach vorne horizontal weg ragendes oberseitiges Anschlussblech 11, eine von dessen Vorderrand 113 dann nach abwärts ragenden Vorderfläche 12 und ein etwa balkonartig wieder im wesentlichen horizontal nach vorne ragendes erstes Rohrstück-Halterungsbord 13 auf, das eine Mehrzahl von - hier nach vorne offenen ersten Rohrstück-Halteausnehmungen 15 aufweist.

Das Rohrführungs- und Geräte-Paneel 2 weist von seiner Rückwand 20 nach vorne ragende Geräte- und Rohrhalterungselemente 22 auf, und von dem unteren Rand 203 der Rückwandplatte 20 ragt - ebenfalls etwa balkonartig horizontal nach vorne - das zweite Rohrstück-Halterungsbord 23 mit an den der Lage der hier nach vorne offenen Rohrstück-Halteausnehmungen 15 des ersten Rohrstück-Halterungsbords 13 entsprechenden Stellen angeordneten Rohrstück-Halteöffnungen 25, die hier rundum geschlossen sind. Zwischen den eben genannten Rohrstück-Halteöffnungen 25 sind jeweils Einschneidungen 26 vorgesehen, die in einen sie verbindenden, vorderseitigen Gesamtspalt mündenden, wodurch eine, wenn auch relativ geringe gegenseitige Höhendifferenzeinstellung der dort letztlich montierten Rohrstücke ermöglicht ist. Nach vorne hin ist das zweite Rohrstück-Halterungsbord 23 mit einer aufwärts strebenden, z.B. durch Aufbiegen bewirkten Brüstung 24 abgeschlossen.

Wesentlich und insbesondere die Montage erleichternd und letzten Endes den festen gegenseitigen Sitz der beiden soeben genannten Funktionspaneele 1 und 2 ermöglichen die Passsitz- und Gegen-Passsitzelemente 111, 112, 211, 212 welche im vorliegenden Fall zwei außenliegende, quer zur Wandmontageplatte 10 ausgerichtete, aus dem Anschlussblech 11 aufragenden bzw. aus derselben aufgebogenen Zungen sind, die zu ihren freien Enden hin durch beidseitige Schrägen sich verjüngend ausgebildet sind und jeweils einen Fußbereich 1111 aufweisen und eine mittige, hier parallel zur Wandmontageplatte 10 ausgerichtete Passsitz-Blechzunge 112, welche durch ihren Fußbereich 1121 ebenfalls den Passsitz garantiert.

Die soeben genannten Passsitzelemente 111, 112 ragen in entsprechend ausgebildete Gegen-Passsitzelemente, nämlich in Öffnungen 211 und 212, welche in das vorkragende Rohrstück-Halterungsbord 23 des Rohrführungs- und Geräte-Paneels 2 eingearbeitet bzw. eingestanzt sind. Die beiden äußeren Gegen-Passsitzöffnungen 211 sind senkrecht zur Rückwandplatte 20 des Rohrführungs- und Geräte-Paneels 2 ausgerichtet und in ihrer Weite exakt auf die Länge des Fußbereichs 1121 der Passsitzelemente (111), also der aufragenden Passsitzelemente 111, abgestellt, während die mittlere Öffnung 212 parallel zu der Rückwandplatte 20 des Rohrführungs- und Geräte-Paneels 2 ausgerichtet mit der aufragenden mittleren mit einer Blechzunge gebildeten Gegenpasssitzelement 112 bzw. mit deren Fußbereich 1121 passsitzend ist.

Zu beachten ist, dass zwischen dem ersten Rohrstück-Halterungsbord 13 des Rohrinstallations-Paneels 1 und dem zweiten Rohrstück-Halterungsbord 23 des Rohrführungs- und Geräte-Paneels 2 ein Abstand a eingehalten ist, welcher die Anordnung von Halterungsmuttern für die jeweils in den Rohrstück-Halteausnehmungen 15 bzw. Rohrstück-Halteöffnungen 25 fix anzuordnenden Rohrstücke, welche gegebenenfalls mit Hähnen, Ventilen od. dgl. ausgerüstet sind, und den Verbindungs- bzw. Anschlussmuttern zwischen den Rohrstücken der beiden Funktionspaneele 1, 2 bei der Endmontage des neuen Installations-Montagemoduls 100 ermöglicht.

Bei sonst gleichbleibenden Bezugszeichenbedeutungen zeigen die Fig. 2a bis 2c den neuen zweiteiligen Installations-Montagemodul 100 im montierten Zustand in Vorder-, Seiten und Obenansicht, wobei hier insbesondere aus Fig. 2a die Anordnung der quer zur Rückwandplatte 20 verlaufenden Einschneidungen 26 zwischen den Rohrstück-Halteöffnungen 25 und des sich parallel zur Rückwandplatte 20 erstreckenden, die genannten Einschneidungen 26 miteinander verbindenden Längsschlitzes sichtbar sind. Diese Einschneidungen 26 ermöglichen eine unterschiedliche gegenseitige Höhenlage der in die Rohrstück-Halteöffnungen 25 eingesetzten und dort beispielsweise mittels Muttern befestigten Rohrstücke, wodurch eine günstige Anpassbarkeit an die reale Montagesituation gegeben ist.

Die Fig. 3 zeigt - bei sonst gleichbleibenden Bezugszeichenbedeutungen - das Zusammenspiel der oben näher beschriebenen Passsitz- und Gegen-Passsitzelemente 111, 211 im Detail.

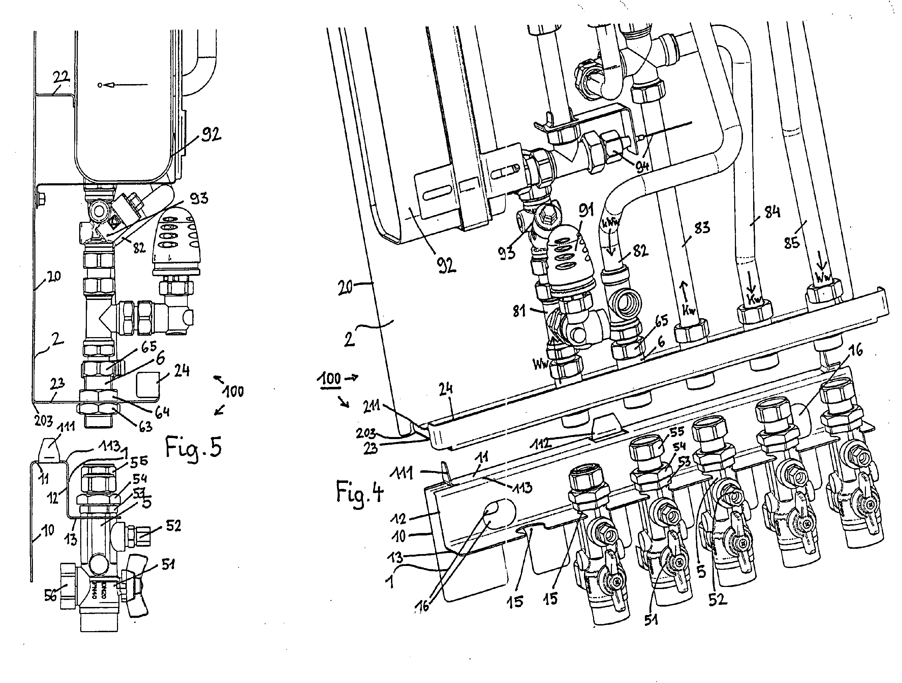

In den Fig. 4 und 5 sind - bei sonst gleichbleibenden Bezugszeichenbedeutungen - die bei den Funktionspaneelen 1 und 2 im Zustand knapp vor dem Zusammenschluss zu dem neuen Installations-Montagemodul 100 in Schrägansicht und in Seitenansicht gezeigt:

Am bauseitig zu montierenden Rohrinstallations-Paneel 1 sind die mit den - hier nicht gezeigten - bauseitigen Zu- und Ableitungsrohren zu verbindenden Rohrstücke 5, hier alle mit Kugelhähnen 51 und mit nach vorne gerichteten Stutzen 52 für den möglichen Anschluss von Sensoren, wie z.B. Temperatursensoren, schon vormontiert, welche die Rohrstück-Halteausnehmungen 15 im ersten Rohrstück-Halterungsbord 13 des Rohrinstallations-Paneels 1 durchsetzen und dort mit Muttern 53, 54 höhenreguliert einstellbar sind und deren jedes mit einer nach oben gerichteten Anschlussmutter 55, hier als Überwurfmutter ausgebildet, ausgestattet ist.

Am Rohrführungs- und Geräte-Paneel 2 durchsetzen die an die ersten Rohrstücke 5 anzuschließenden zweiten Rohrstücke 6 die Rohrstück-Halteöffnungen 25 in dessen nach vorne ragenden zweiten Rohrstück-Halterungsbord 23 und sind dort mit ober- und unterhalb der genannten Öffnungen 25 angeordneten Muttern 63, 64 exakt in Position gehalten.

Diese zweiten Rohrstücke 6 sind mittels Verbindungsmuttern 65 hier schon fertig vormontiert an die weiterführenden Zu- und Ableitungs- bzw. Kreislaufführungsrohre 81 bis 85, die teilweise zu den an dem Rohrführungs- und Geräte-Paneel 2 montierten Geräten 91 bis 94 führen und von denselben zu den verbraucherseitigen Armaturen, Heizungspaneelen u. dgl. wegführen, gebunden.

Was die an dem Rohrführungs- und Gerätemodul 2 gebundenen Geräte 91 bis 94 betrifft, so sind in den beiden Fig. 4 und 5 folgende gezeigt, wobei an dieser Stelle betont sei, dass weder die Art noch die Zahl der unterschiedlichen Geräte auf die hier gezeigten beschränkt ist.

In zumindest einer der beiden Fig. 4 und 5 sind folgende Geräte 91-94 und Rohrleitungen gezeigt:

Rücklauftemperaturbegrenzungsorgan 91 mit eventuellem Bypass, Schmutzfänger 93 mit Verschraubung, Wärmetauscher 92 und Temperatursensor 94.

Mittels der Anschlussmuttern 55 werden beim Zusammenschluss der beiden Funktionspaneele 1 und 2 die soeben besprochenen, mit den Kugelhähnen 51 und Anschlussstutzen 56 ausgestatteten Rohrstücke 5 an die mit entsprechenden Außengewinden ausgestatteten Rohrstücke 6, welche die Rohrstück-Halteöffnungen 25 in dem zweiten Rohrstück-Halterungsbord 23 des Rohrführungs- und Gerätepaneels 2 durchsetzen und dort mittels der Muttern 63, 64 in fixer Lage gehalten sind, fluiddicht aneinander geschlossen.

Diese Rohrstücke 6 sind über Verbindungsmuttern 65 mit den auf der Rückwandplatte 20 des Rohrführungs- und Geräte-Paneels 2 fertig vormontierten Ableitungs- bzw. Kreislaufführungsrohr 81 bis 85 verbunden.

Das kurze Rohr 81 führt das für die Weiterleitung vorgesehene Heißwasser Ww über ein Rücklauftemperaturbegrenzungsorgan 91 und einen Schmutzfänger 93 mit Verschraubung in den Wärmetauscher 92, aus welchem nach Abgabe seiner Wärme an einen Teil des durch das Rohr 83 einströmenden und letztlich zu den Verbrauchsstellen in Küche, Bad od. dgl. durch das Rohr 84 ausströmenden Kaltwassers Kw ab. Das dann dadurch abgekühlte Warmwasser kWw wird wieder zu einem - beispielsweise zentralen - Wasserheizkessel, in ein Fernheizwerk od. dgl. zurückgeführt. Der im Wärmetauscher 92 erhitzte Teil Ww des durch das Rohr 83 einströmenden Kaltwassers Kw fließt durch das Rohr 85 aus und letztlich z.B. zu den peripheren Warmwasser-Verbrauchsstellen, z.B. in Küche und Bad.

Aus der Fig. 5 ist noch ersichtlich, dass das Gehäuse der ersten Rohrstücke 5 jeweils als Eck- oder Durchgangs-Kugelhahn 51 ausgeführt sein kann, mit einem hier zur Wandmontageplatte 10 weisenden Anschlussstutzen 56.

Nicht zuletzt sei nochmals auf die als nach oben gerichtete Blechzungen mit Endverjüngung ausgebildeten Passsitzelemente 111 mit Ausrichtung senkrecht und 112 mit Ausrichtung parallel zur Wandmontageplatte 10 hingewiesen, durch welche im Zusammenwirken mit den hier nur in einem Fall ansatzweise sichtbaren Passsitzöffnungen 211, 212 im Bord 23 des Paneels 2 eine genaue gegenseitige Übereinstimmung der Situierung der Rohrstücke 5 und 6 sichergestellt ist.

Die ovalen Öffnungen 16 in der Wandmontageplatte 10 und in der Vorderfläche 12 dienen zur lagegerechten Anordnung des Rohrinstallations-Paneels 1.

Ist zum Beispiel eine Änderung im Gerätebestand und/oder in den Rohrführungen erwünscht, so kann ein bestehendes Rohrführungs- und Geräte-Paneel 2, wenn erwünscht oder notwendig, jederzeit auf ganz einfache Weise problemlos durch ein entsprechend anders bestücktes und/oder verrohrtes derartiges Rohrführungs- und Geräte-Paneel 2 ersetzt werden.

## Patentansprüche

1. Montagemodul für Gas-, Kalt- und Warmwasser- und/oder Heizungs-Zu-, -Ab- und/oder Kreislaufleitungen am Übergang von gebäudeseitigen zu verbrauchsseitigen Installationen, **dadurch gekennzeichnet,**
**dass** er mit
- einem an einem Bauteil bzw. einer Wand (9), insbesondere Schachtwand, eines Gebäudes anorden- bzw. montierbaren Rohrinstallations-Paneel (1) mit einer von einer wand- bzw. rückseitigen Wandmontageplatte (10) nach vorne wegragenden oberseitigen Anschlussfläche (11) und einem von einer - von deren Vorderrand (113) abwärts ragenden - Vorderfläche (12) etwa balkonartig wieder im Wesentlichen horizontal nach vorne ragenden, ersten Rohrstück-Halterungsbord (13) mit einer Mehrzahl von, bevorzugterweise nach vorne hin offenen Rohrstück-Halteausnehmungen (15) und mit
- einem auf demselben passsitzend aufsetzbaren, mit entsprechenden, gegenseitige Längs- und Querverschiebung in der Horizontalen verhindernden Passsitzelementen (111, 112) des Rohrinstallations-Paneels (1) passsitz-kooperierbare bzw. -kooperierende Gegen-Passsitzelemente (211, 212) aufweisenden - Rohrführungs- und Gerätepaneel (2) mit von dessen Rückwandplatte (20) nach vorne ragenden Rohr- und Gerätehalterungselementen (22) und einem von deren unterem Rand (203) ebenfalls balkonartig nach vorne im Wesentlichen horizontal wegragenden zweiten Rohrstück-Halterungsbord (23) mit an den, den Rohrstück-Halteausnehmungen (15) des ersten Rohrstück-Halterungsbords (13) entsprechenden, Stellen angeordneten Rohrstück-Halteöffnungen (25)
gebildet ist.

2. Montagemodul nach Anspruch 1, **dadurch gekennzeichnet, dass** die Passsitzelemente (111, 112) an, auf und/oder in der Anschlussfläche (11) des Rohrinstallations-Paneels (1) und die Gegen-Passsitzelemente (211, 212) an dem zweiten Rohrstück-Halterungsbord (23) des Rohrführungs- und Geräte-Paneels (2) angeordnet sind oder umgekehrt.

3. Montagemodul nach einem der Ansprüche 1 oder 2,
**dadurch gekennzeichnet,**
**dass** die Gegen-Passsitzelemente (211, 212) den Querschnittsformen und -flächen (Q1) zumindest der Fußbereiche (1111, 1121) der Passsitzelemente (111, 112) entsprechende Querschnittsformen bzw. -flächen aufweisen, und dass die Passsitzelemente (111, 112) zu ihren freien Enden hin, bevorzugt zentral bzw. symmetrisch, sich verjüngend ausgebildet sind.

4. Montagemodul nach einem der Ansprüche 1 bis 3,
**dadurch gekennzeichnet,**
- **dass** die Passsitzelemente (111, 112) als von dem Rohrinstallations-Paneel (1) bzw. von dessen Anschlussfläche (11) nach oben ragende, bevorzugt aus dem Plattenmaterial, insbesondere Blech, dieser Anschlussfläche (11) aufgebogenen, schmalen Passsitzzungen mit beidseitigen Führungsverjüngungen zu ihren freien Enden hin ausgebildet sind, wobei zumindest zwei der Passsitzzungen voneinander beabstandet im Wesentlichen quer, bevorzugt senkrecht, zur Wandmontageplatte (10) angeordnet sind und zumindest eine andere bzw. weitere Passsitzzungen im Wesentlichen parallel zur Wandmontageplatte (10) des Rohrinstallations-Paneels (1), bevorzugt zwischen, insbesondere etwa mittig, zwischen den beiden Passsitzelementen (111, 112), angeordnet ist bzw. sind, und
- **dass** die Gegen-Passsitzelemente (211, 212) als, bevorzugt aus dem Plattenmaterial, insbesondere Blech, des zweiten Rohrstück-Halterungsbords (23) des Rohrführungs- und Gerätepaneeis (2) ausgestanzte, bevorzugt rechteckige, Passsitz-Öffnungen ausgebildet sind, welche in deren der jeweiligen Ausrichtung der als Passsitzzungen ausgebildeten Passsitzelemente entsprechenden Richtungen eine der Längsausdehnung der Fußbereiche (1111, 1121) der Passsitzzungen entsprechende, horizontalverschiebungshindernde Öffnungsweiten aufweisen.

5. Montagemodul nach einem der Ansprüche 1 bis 4,
**dadurch gekennzeichnet, dass** in dem zweiten Rohrstück-Halterungsbord (23) des Rohrführungs- und Geräte-Paneels (2) zwischen und vor den dort angeordneten Rohrstück-Halteöffnungen (25) jeweils quer, insbesondere senkrecht, zur Erstreckung der Rückwandplatte (20) ausgerichtete Einschneidungen (26) und ein, bevorzugt alle Einschneidungen (26) verbindender, vorderseitiger Quer-Schlitz (26') ausgebildet sind, welche geringe, voneinander unabhängige Höheneinstellungen der Rohrstück-Halteöffnungen (25) ermöglichen.

6. Montagemodul nach einem der Ansprüche 1 bis 5,
**dadurch gekennzeichnet,**
**dass** in zumindest einer Rohrstück-Halteausnehmung (15) im ersten Rohrstück-Halterungsbord (13) des Rohrinstallations-Paneels (1) und in zumindest einer derselben entsprechenden Rohrstück-Halteöffnung (25) im zweiten Rohrstück-Halterungsbord (23) des Rohrführungs- und Geräte-Paneels (2) jeweils ein einen, gegebenenfalls wesentlich, geringeren Außendurchmesser als die Breite, Weite bzw. der Durchmesser der genannten Rohrstück-Halteausnehmung (15) und der Rohrstück-Halteöffnung (25) aufweisendes Rohrstück (5, 6), vorzugsweise mit Außengewinden, angeordnet sind, welche jeweils mit beidseitig aufgeschraubten, einen größeren Durchmesser als die Breite, Weite bzw. der Durchmesser der Rohrstück-Halteausnehmung (15) und der Rohrstück-Halteöffnung (25) aufweisendem Durchmesser in der Rohrstück-Halteausnehmung (15) bzw. Rohrstück-Halteöffnung (25) gehalten sind, und dass für den Zusammenschluss jeweils der beiden einander entsprechenden, und bevorzugt in ihrer Anordnung bzw. Lage mittels Schablone od. dgl. exakt positionsmäßig aufeinander abgestimmten, Rohrstücke (5, 6) jeweils ein Zusammenschlusselement; insbesondere eine Anschlussmutter (55), vorgesehen ist.

7. Montagemodul nach einem der Ansprüche 1 bis 6,
**dadurch gekennzeichnet, dass** das zweite Rohrstück-Halterungsbord (23) des Rohrführungs- und Geräte-Paneels (2) vorderseitig einen etwa brüstungsartigen, aufwärts weisenden Randstreifen (24) aufweist.

8. Montagemodul nach einem der Ansprüche 1 bis 7,
**dadurch gekennzeichnet, dass** die beiden denselben bildenden, satt und zumindest horizontal gegenseitig unverschiebbar an-, in- oder aufeinander schiebbaren Funktionspaneele (1) und (2) aus Metallblech oder einer, vorzugsweise wärmebiegbaren, rigiden Kunststoffplatte, bevorzugt aus Recycling-Kunststoff, gefertigt sind.

9. Montagemodul nach einem der Ansprüche 1 bis 8,
**dadurch gekennzeichnet,**
**dass** an bzw. in dem Rohrführungs- und Geräte-Paneel (2), insbesondere von den Halterungselementen (22) von deren Rückwandplatte (20) selbst gehalten, und miteinander über Rohr- und Elektro- bzw. Datenleitungen verbunden, Wärmetausch-, Gas- und/oder Wassermengenzähl-, Wärmetausch (92)- Temperaturmess-, und -regelungs (91)-, Datenverknüpfungs-, Schmutzfang (93)- Steuerungs- und/oder KontrollGeräte angeordnet sind.
